# EUROPEAN PATENT APPLICATION

(11) **EP 4 628 410 A1**
(43) Date of publication of application: **08.10.2025**
(21) Application number: 25163961.3
(22) Date of filing: 14.03.2025
(51) Int. Cl.: B64G 1/64

(54) **PAYLOAD RELEASE SYSTEM**

(30) Priority: 01.04.2024 US 202463572625 P
(71) Applicant: Ensign-Bickford Aerospace & Defense Company, Simsbury, CT 06070 (US)
(72) Inventor: IONNO, Luke K., Simsbury, 06070 (US); KLECKA, Ryan E., Moorpark, 93021 (US); KACZINSKI, Geoffrey P., Moorpark, 93021 (US); VENTI, Phillip P., Moorpark, 93021 (US); KOERNER, Daniel A., Simsbury, 06070 (US)
(74) Representative: Harris, Oliver John Richard

(57) **Abstract**

The device for holding down a mobile structure, e.g., a payload, to a launch vehicle and for releasing the payload comprises a base structure (106) fixed to the launch vehicle, a plate (112) fixed to the payload, a releasable actuator (126), a release payload mechanism and a release rod (128) are driven to movement in an axial direction relative to the base structure upon activation of the actuator. The base structure and the plate comprises mating surfaces (108, 110) including a concentric shear feature capable of transferring combined shear, axial, and moment loads between the base structure and the plate, with a single point of preloaded axial-only retention.

## Description

### CROSS REFERENCE TO RELATED APPLICATIONS

This application claims the benefit of U.S. Provisional Application Serial No. 63/572625, filed April 1, 2024, the entire disclosure of which is incorporated herein by reference.

### BACKGROUND

The subject matter disclosed herein relates in general to a payload release system for use, for example, on satellites.

Components of a launch vehicle may need to be separated during flight to jettison stages and components that are no longer needed, to uncover equipment, or release a payload into orbit for example. Components of a launch vehicle may also need to be separated to deploy payloads. Once the launch vehicle reaches a destination or desired orbit characteristic, then payload satellites, probes, or other payloads can be deployed and placed into a functioning mode. Payloads, for example satellites, can be carried by launch systems, such as space vehicles, into orbit or other destinations in space. Satellites can be placed into Earth orbit (or into orbit around other bodies) to perform various tasks, such as sensing, surveillance, communications, or scientific experimentation.

The separation occurs at the desired times of the launch vehicle's flight and with reduced or minimum changes in the attitude and rotational rates, i.e., tip-off errors, of the continuing body. In particular, there must be no re-contact between the separating body(ies), no detrimental shock loads induced in the structure, and no excessive or undesired debris. A separation mechanism that does not meet these requirements can produce attitude errors and tumble rates of the continuing body that are too great for its attitude-control system to accommodate, resulting in potential damage to its structure and equipment, and can cause failure or degradation of the mission.

Traditionally, the separation mechanism implemented to deploy payloads have been hold down and release mechanisms (HDRM). An HDRM is generally an electro-mechanical device, and in some configurations may be a "one-shot" or single-use device. An HDRM typically utilizes a self-aligning conic, i.e. "cup-cone", design for the load-bearing surface. However, this design is prone to tipping errors and experience increases stresses associate with the shear loads, axial loads, and overturning moments due to its geometry and deep conical feature.

The payload release system's main functions are to secure during launch and release once at its destination or in orbit moveable payload items, deployable appendages and separable mission elements. The payload release system may also be used to achieve synchronisation for the deployment and/or ejection of specific appendages or separable mission elements. The payload release system's primary function is to secure the appendage to the spacecraft during launch and transmitting the inertial loads between the spacecraft and the appendage by a stiff connection. When the spacecraft reaches a destination or desired orbit characteristic, the actuator of the payload release system is instructed to release the appendage.

Elements of space payloads may include, but are not limited to, solar arrays, antenna reflectors, radiators, instrument booms, propulsion pointing actuators, doors, sensors, or other deployable devices, etc. and/or deployable components or systems (e.g., satellites, micro-satellites, etc.). The elements may be deployed as desired by activating the release mechanisms. As will be appreciated by those of skill in the art, deployable elements may include parts of spacecraft (e.g., deployable from the spacecraft) and spacecraft as the deployable element (e.g., as deployed from a launch vehicle or stage of a launch vehicle).

Accordingly, while existing payload release systems are suitable for their intended purposes the need for improvement remains, particularly in providing a payload release system having the features described herein.

### BRIEF DESCRIPTION

According to one aspect of the disclosure of the payload release system is provided. The system includes a base and a plate positioned on top of the base. The system further includes at least one mating interface, at least one spring assembly coupled to the base, and a releaseable actuator positioned with the base that extends through the base and the plate.

In addition to one or more of the features described herein, or as an alternative, further embodiments of the system may include the releaseable actuator including a release rod that extends through a bore hole of the plate and base, where the bore holes are located roughly center on the plate and base.

In addition to one or more of the features described herein, or as an alternative, further embodiments of the system may include a biasing member that encircles the release rod, a dampening disk located on a distal end of the release rod, above the biasing member, and a hollow cylindrical cap that encapsulates the release rod, biasing member, and dampening disk.

In addition to one or more of the features described herein, or as an alternative, further embodiments of the at least one mating interface may comprise of a first mating interface on the plate and a second mating interface on the base, the bore holes extends through the first mating interface of the plate and the second mating interface of the base. The system may include a liner that is positioned in-between the base and the plate.

In addition to one or more of the features described herein, or as an alternative, further embodiments of the spring assembly may include an outer spring guide, an inner spring guide nested within the outer spring guide, a top cap coupled to a top portion of the outer and the inner spring guide, a bottom cap coupled to a bottom portion of the outer and the inner spring guide, a payload release mechanism that encircles the outer spring guide and is positioned between the top and bottom cap, and a fastener. The spring assembly may further include a rod positioned within and extending through the inner spring guide.

In addition to one or more of the features described herein, or as an alternative, further embodiments of the spring assembly may include the spring assembly being removeably coupled to the base. The spring assembly may include a body configured to be compressed such that when the fastener is removed and the top cap and a top flat portion of the rod is pushed downward a predetermined distance, the at least one spring assembly may be removed from the base.

In addition to one or more of the features described herein, or as an alternative, further embodiments of the system may include the base having a diameter of 1 to 10 inches.

In addition to one or more of the features described herein, or as an alternative, further embodiments of the system may include a telemetry switch configured to receive and send a signal regarding launch instructions.

In addition to one or more features described herein, or as an alternative, further embodiments of the system may include the first mating interface and the second mating interface further include two or more reciprocal concentric shear features.

In addition to one or more features described herein, or as an alternative, further embodiments of the system may include the concentric shear feature of the first mating interface and the concentric shear feature of the second mating interface include a plurality of concentric ridge features and a plurality of concentric groove features, respectively.

In addition to one or more features described herein, or as an alternative, further embodiments of the system may include the plurality of concentric ridge features of the first mating interface and the second mating interface are spaced at a ratio of 1.4 to 1 of peak to peak spacing to depth.

In addition to one or more features described herein, or as an alternative, further embodiments of the system may include the plurality of concentric ridge features of the first mating interface extend from the plurality of the concentric groove features at an angle from 30° to 120° and the plurality of concentric ridge features of the second mating interface extend from the plurality of the concentric groove features at an angle from 30° to 120°.

According to one aspect of the disclosure of the method for exchanging a spring assembly is provided. The method includes the steps of disengaging a fastening from a bottom cap of the spring assembly, thereby decoupling the spring assembly from a base, followed by applying a force on a top cap of the spring assembly and a rod extending through the spring assembly, thereby compressing a payload release mechanism of the spring assembly, then releasing the spring assembly from the base.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIGS. 1A and 1B depicts a block diagram of a launch vehicle deploying a payload via a payload release system;
FIG. 2 is an unassembled view of an embodiment of a payload release system;
FIG. 3 is a perspective view of the payload release system;
FIG. 4 is a perspective view of a mating interface of a lower fitting of the payload release system;
FIG. 5 is a cross-sectional view of a spring assembly;
FIG. 6A is a perspective view of an embodiment of the payload release system;
FIG. 6B is a partial perspective view of a telemetry switch;
FIG. 7 is a side view of a releasable actuator of the payload release system;
FIG. 8 is a cross-section view of the payload release system with depictions of the axial, shear, and moment load forces;
FIG. 9 is a cross-section view of the payload release system in a pre-deployment configuration;
FIG. 10 is a cross-sectional view of the payload release system in a deployed configuration;
FIG. 11 is a perspective view of the mating interface of the plate;
FIG. 12 is an unassembled view of another embodiment of the payload release system including a liner, showing concentric shear transfer features; and
FIG. 13 is a partial cross-section showing a concentric shear features and installed liner.

### DETAILED DESCRIPTION

Embodiments disclosed herein provide for a payload release system designed to mount, hold, and release a payload from a launch vehicle, or from another carrying spacecraft.

Launch vehicles typically have multiple stages and are used to carry payloads during travel away from the Earth's surface after the vehicles are launched, and then place or deploy the payloads into orbit or beyond. The launch vehicle is laid out with a standard configuration but there are always unique modifications for each payload. These payloads are commonly referred to as satellites if they are intended to orbit a body (e.g., Earth) after deployment, or as spacecraft if they are intended to leave the Earth's orbit after deployment. The term " payload" will be used herein to refer to both satellites, spacecraft, and/or space-bound vehicles, devices, and/or structures and other payloads.

Elements of payloads may include, but are not limited to, solar arrays, antenna reflectors, radiators, instrument booms, propulsion pointing actuators, doors, sensors, or other deployable devices, etc. and/or deployable components or systems (e.g., satellites, micro-satellites, etc.). The elements may be deployed as desired by activating the release mechanisms and releasable actuator. As will be appreciated by those of skill in the art, deployable elements may include parts of a spacecraft ( e.g., deployable from the spacecraft) and spacecraft as the deployable element (e.g., as deployed from a launch vehicle or stage of a launch vehicle).

The payload release assembly described herein employs a new geometry the provides advantages in increased rigidity in securing the payload, provides a cleaner release, and resists tipping. In one or more embodiments, a series of concentric groove features with ridges are machined onto the mating faces of the payload release assembly to provide a high-stiffness, self-releasing joint capable of transferring combined shear, axial and moment loads between structural fittings, with a single point of preloaded axial-only retention. These embodiments are more compact than its predecessor technology while possessing an improved moment capacity and greater tipping resistance.

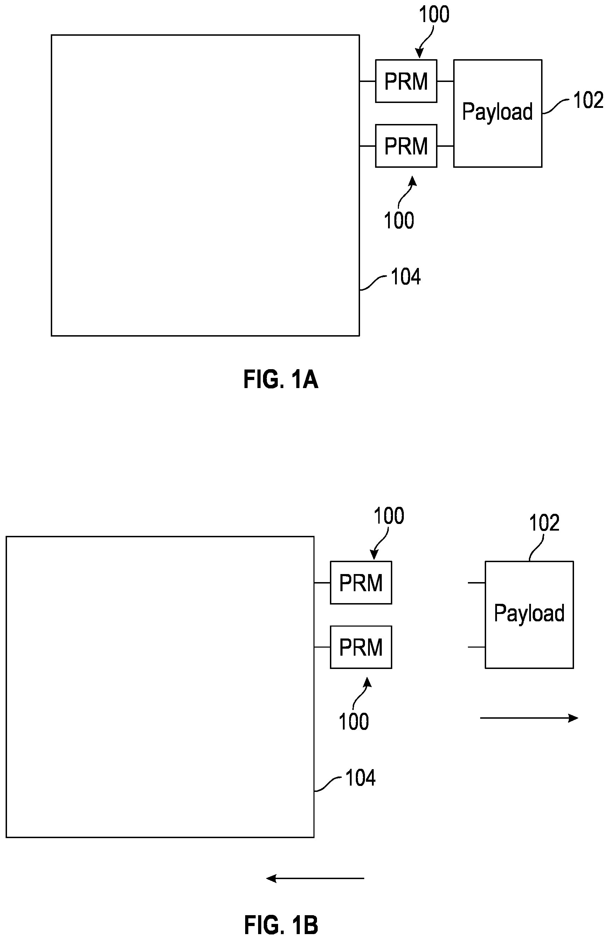

Referring to FIGS. 1A and 1B, one or more payload release systems 100 rigidly secure a payload 102 to a launch vehicle 104. Once the launch vehicle 104 reaches a destination or desired orbit characteristic, then the payload release system 100 is activated and deploys the payload 102. Upon deployment, the payload 102 and the launch vehicle 104 separate and move in separate directions, for example, as indicated by the arrows. A portion of the payload release system 100 is secured to the launch vehicle 104 while another portion of the payload release system 100 is secured to the payload 102. The portion secured to the payload 102 deploys with the payload 102 upon activation.

Turning to the payload release system, the payload release system 100 is an ultra-low shock, electrically initiated, single-shot/single-use, and factory refurbishable release mechanism that has the ability to carry a high tensile preload until commanded to release.

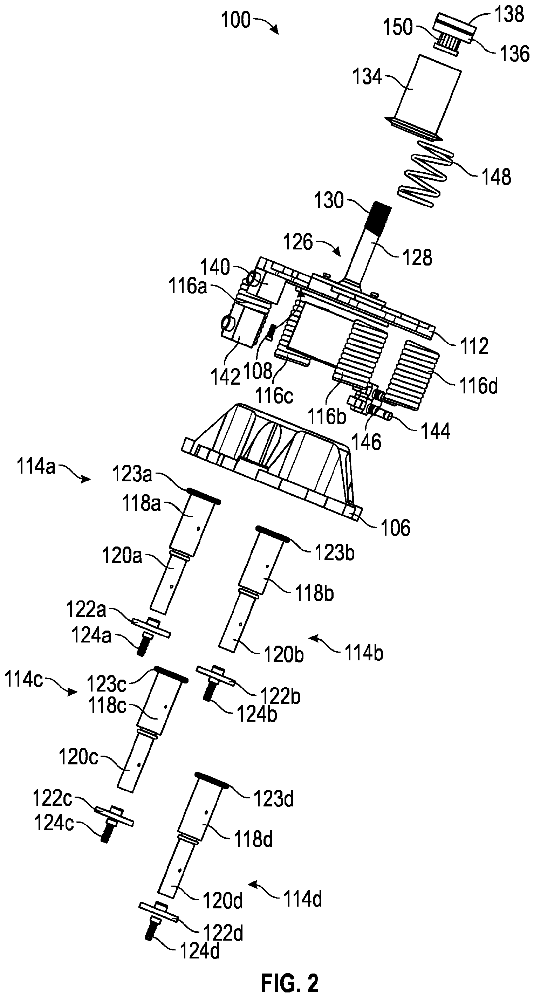

Referring now to FIGS. 2-4, an embodiment of a payload release system 100 is shown. The system includes a lower fitting 106, a plate 112, spring assemblies 114a-d, a releasable actuator 126, a rod guide 134, a first and second disk 136, 138, a first and second connector 140, 142, a first and second control connection point 144, 146, a spring 148, and a flange nut 150.

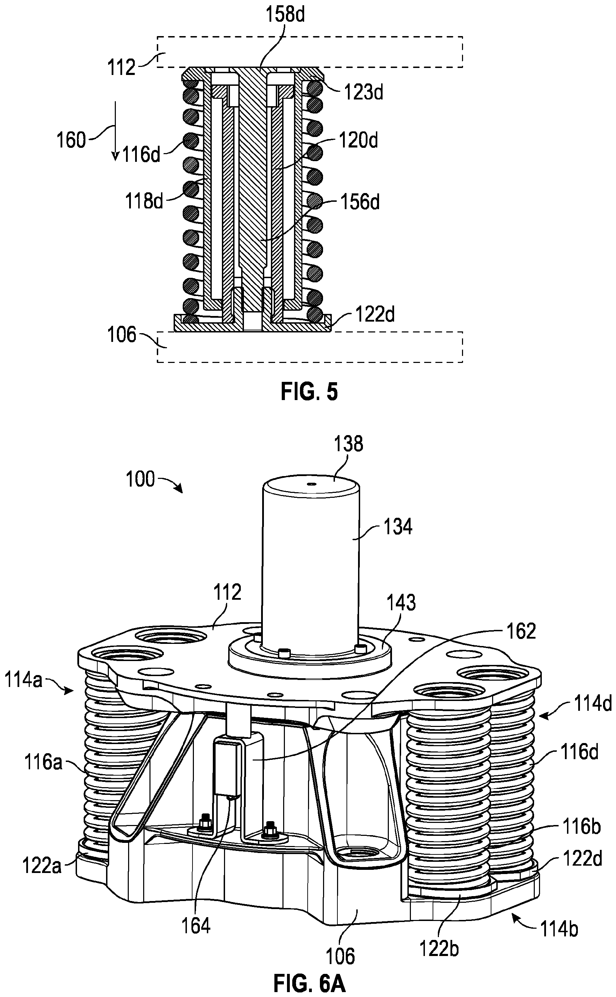

The spring assemblies 114a-d are coupled to the lower fitting 106 and include outer spring guides 118a-d, inner spring guides 120a-d, top caps 123a-d, bottom caps 122a-d positioned at a bottom of the outer and the inner spring guides 118a-d, 120a-d, and fasteners 124a-d for coupling the spring assemblies 114a-d to the lower fitting 106. A payload release mechanism 116a-d is positioned on the spring assemblies 114a-d and applies a spring force during deployment of the payload 102 to ensure or reduce the risk of the payload 102 re-contacting with the launch vehicle 104. Prior to deployment of the payload 102, the payload release mechanism 116a-d is in a compressed position. The outer and inner spring guides 118a-d, 120a-d are telescopic and are positioned inside the payload release mechanism 116a-d, keeping the payload release mechanism 116a-d captive as the springs extend. In an embodiment, four spring assemblies may be utilized, however it should be appreciated that more or fewer spring assemblies may be used. In this embodiment, two spring assemblies 114a, 114c, are located on the same side of the lower fitting 106 and on the opposite side of two spring assemblies 114b, 114d. In an alternative embodiment with four spring assemblies, each spring assembly can be located on a different side of the lower fitting 106. In an alternative embodiment, depending on the modifications required for the payload, the payload release system 100 can include two spring assemblies or three assemblies. Payload release mechanisms are typically tuned prior to use and are replaced after the useful operating life conditions are met. Traditionally, the entire payload release system is disassembled for this to occur. The spring assemblies 114a-d, including the payload release mechanism 116a-d, as described herein, provide advantages in that the springs can be tuned and replaced without disassembling the device. The spring assemblies 114a-d are secured to the lower fitting 106 via inner spring guide 120a-d with the fastener 124a-d. The fastener 124a-d is inserted through the lower fitting 106 into the bottom end of the inner spring guide 120a-d. In an embodiment, the spring assemblies 114a-d can include a rod 156a-d positioned within the inner spring guide 120a-d, as shown in FIG. 5. In this embodiment, the fastener 124a-d fastens/screws into the rod 156a-d, preventing the other components of the spring assembly 114a-d from rotating freely. The rod 156a-d includes a top flat portion 158a-d that sits flush with the outer spring guide 118a-d.

As stated previously, the spring assembly 114a-d is selectively removable from the payload release system 100. In an embodiment, the spring assembly 114a-d is first removed, without disassembling the device, by removing the fastener 124a-d. Once the fastener 124a-d is removed, the top flat portion 158a-d of the rod 156a-d is moved/pushed in the direction of the arrow 160. Once the top flat portion 158a-d is depressed a predetermined distance, the spring assembly 114a-d may be removed by sliding the spring laterally. The stiffness of the material of the payload release mechanism, the thickness of the material of the payload release mechanism, the diameter of the turns of the payload release mechanism, the number of turns per unit length, and the overall length of the payload release mechanism affects the potential energy stored in the payload release mechanism, which is later translated into kinetic energy when deploying the payload. Based on the payload being deployed, payload release mechanisms with different potential energies may be used. The selective removeability of the spring assembly 114a-d allows for different payload release mechanisms 116a-d to be used based on the potential energy needed for deploying the payload.

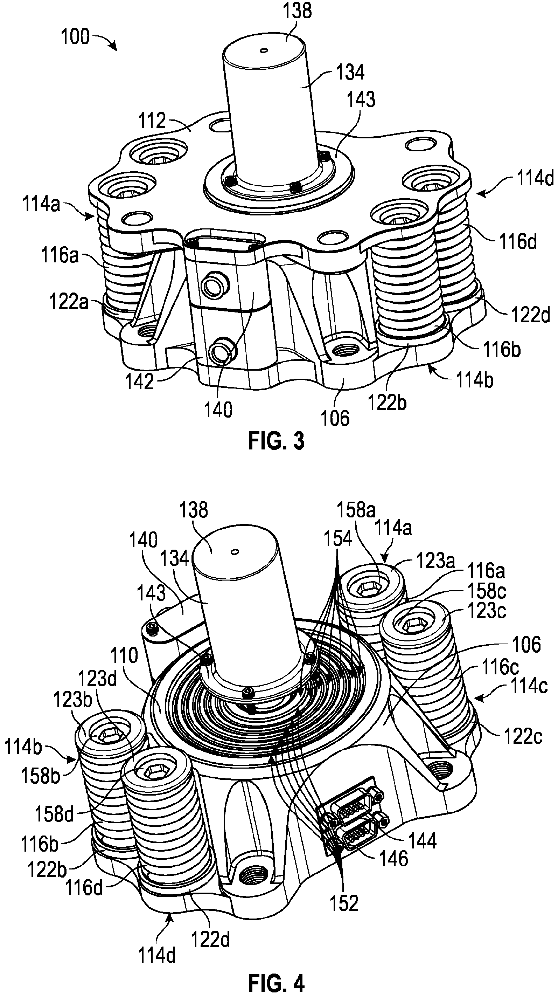

The payload release system 100 includes the first and the second connectors 140, 142 (FIG. 3) and the first and the second control connection point 144, 146 (FIG. 4). The first and the second connectors 140, 142 provide communication and power connections between the launch vehicle 104 and the payload 102. The communication connection allows launch instructions to be communicated between the launch vehicle 104 and the payload 102. The first and the second connectors 140, 142 and the first and the second control connection point 144, 146 (FIG. 4) are coupled to the lower fitting 106. In an embodiment, the first and the second connectors 140, 142 are coupled to the lower fitting 106 on the opposite side of the lower fitting 106 from the first and the second control connection points 144, 146. As stated above, the first and the second control connection points 144, 146 are the actuation connectors to the control unit which provides the instructions to activate the releasable actuator 126 and the payload release mechanism 116a-d to deploy the payload 102. In an embodiment, the payload release system 100 can include a telemetry switch 162. The telemetry switch 162 includes loop 164 on a side of the telemetry switch 162 for a wire (not shown) to run through. Once the launch instructions are sent, the wire is removed, triggering the telemetry switch to send the signal to launch the payload. The telemetry switch 162 described herein can be inverted, i.e. the direction the signal is sent can either be sent to the launch vehicle 104 or the payload 102.

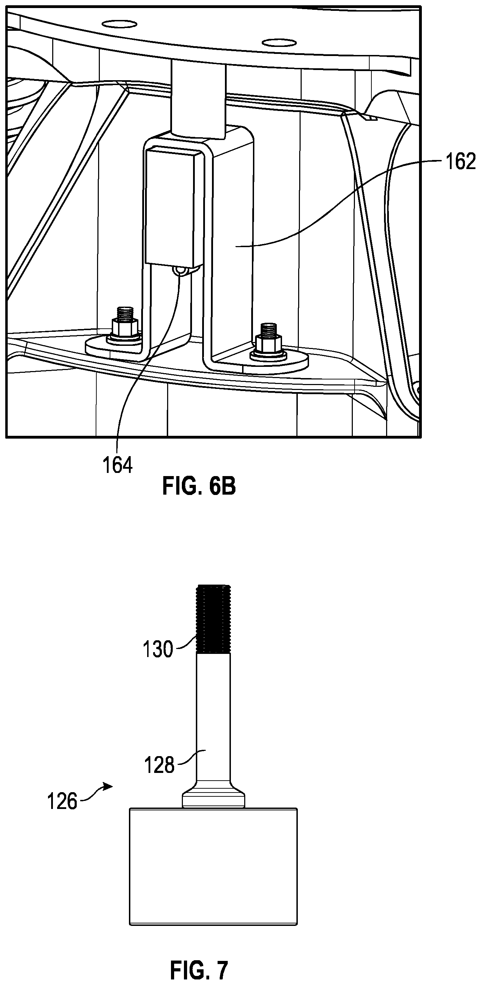

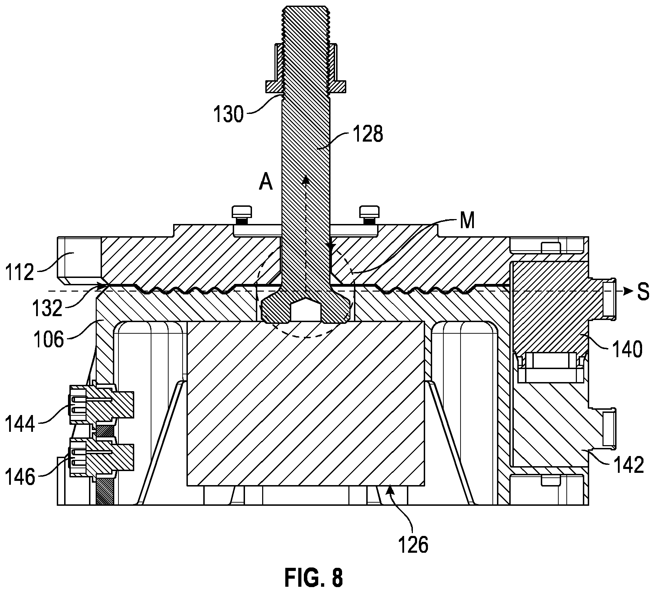

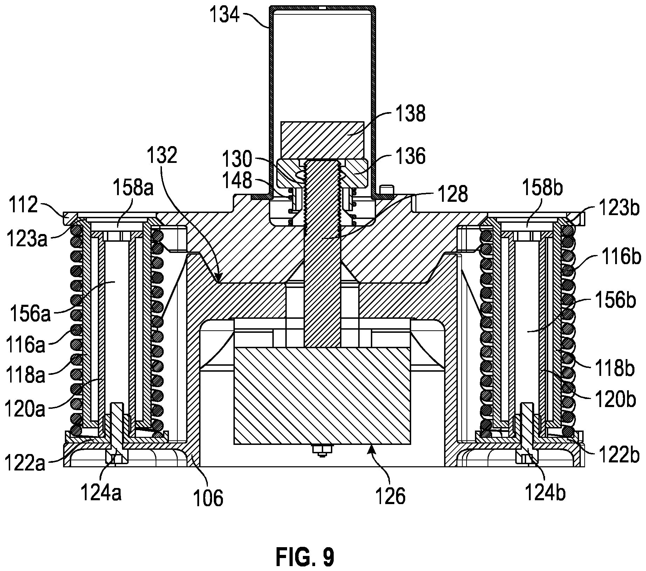

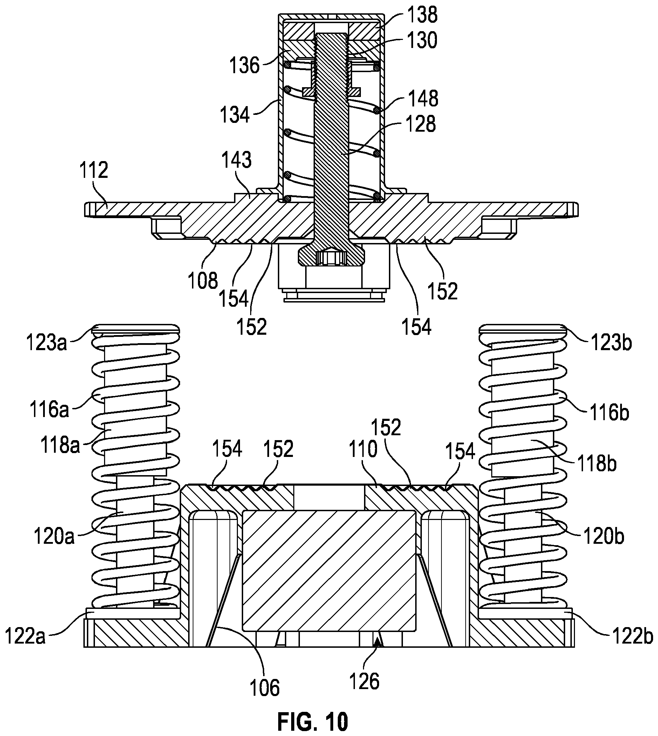

The payload release system 100 further includes the releasable actuator 126, the rod guide 134, the spring 148, and the first and second disk 136, 138. Referring to FIGS. 7-9, the releasable actuator 126 includes a release rod 128. In some embodiments, the releasable actuator 126 can be the releasable actuator described in United States Patent 10,124,915, which is incorporated herein by reference. The release rod 128 includes threads 130 for coupling with the flange nut 150 and the first and the second disk 136, 138. As shown in FIGS. 8-9, the releasable actuator 126 is positioned in the center of the lower fitting and under a second mating interface 110 of the lower fitting 106, with the release rod 128 extending through the second mating interface 110 and the plate 112. As shown in FIG. 9, the release rod 128 is positioned inside the spring 148 and rod guide 134. The first and the second disk 136, 138 are coupled to the top of the release rod 128. The first disk 136 is a base plate for the release rod 128 to contact with as it deploys the payload 102 during deployment of the payload 102. The second disk 138 is a dampening disk that contacts the rod guide 134 during deployment of the payload 102. When deploying the payload 102, the spring 148 applies a force on the release rod 128, moving the release rod 128 away from the releasable actuator 126 and into the rod guide 134. As the release rod 128 moves upward into the rod guide 134, the dampening disk 138 contacts a top portion of the rod guide 134 (FIG. 10). The dampening disk 138 material can include (but is not limited to) polyimide foam or polyurethane foam. The dampening disk 138 reduces the shock experienced by the payload 102 when the release rod 128 is activated. As shown in FIG. 10, upon deployment of the payload 102, the plate 112 and release rod 128 detach from the base 106, the releasable actuator 126. The spring assemblies 114a-d remain coupled to the base and the rod guide 134, spring 148, and the first and second disk 136, 138 remain coupled to the plate 112. The payload release mechanism 116a-d is in an extended position and the inner and outer spring guide 118a-d, 120a-d are telescopically extended.

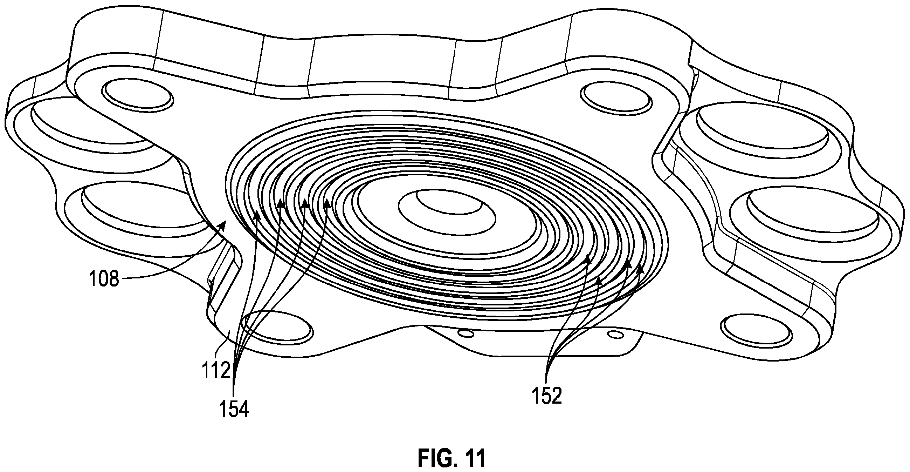

Referring to FIG. 11, and continuing reference to FIGS. 8-9, the plate 112 and the lower fitting 106 can be made out of suitable material such as aluminum alloys, steels, titanium, or similar material, and include reciprocal mating faces (see FIG. 4). The plate 112 includes a spacecraft interface shear feature 143 around the rod guide 134. The payload 102 pilots on the spacecraft interface shear feature 143 so that as the payload 102 experiences shear force, the force is carried on the spacecraft interface shear feature 143. The plate 112 further includes a first mating interface 108 which includes a concentric shear feature. The lower fitting 106 includes the second mating interface 110 which includes a concentric shear feature (FIG. 4). In an embodiment, the lower fitting 106 can have a diameter from 1 to 10 inches, inclusive. In an embodiment, the second mating 110 can have a diameter of .5 to 10 inches. The concentric shear feature includes a plurality of concentric ridge features 152 and a plurality of concentric groove features 154. The first and the second mating interface 108, 110 and the plate 112 include a bore hole for the release rod 128 to extend through. The first and the second mating interface 108, 110 functions as a load transfer surface to resist shear S, axial A, and moment M loads, as shown in FIG. 8, between the lower fitting 106 (secured to the launch vehicle 104) and the plate 112 (secured to the payload 102), and has a large diameter, relative to the overall size/width of the payload release system 100. The large diameter provides high resistance to overturning moments, i.e. moment loads, unlike the traditional cup-cone interface. In an embodiment, the diameter of the first and the second mating interface 108, 110 is 3 inches. In another embodiment the diameter of the first and the second mating interface 108, 110 can be 1-5 inches, depending on the modifications required for the payload.

The reciprocating plurality of concentric ridge features 152 and plurality of concentric groove features 154, on the first and the second mating interface 108, 110, provides engagement between the plate 112 and the lower fitting 106, when constrained in an axial direction A (see FIG. 8). When clamped together axially, these features transfer in-plane (shear) loads between the two fittings. The plurality of concentric ridge features 152 and the plurality of concentric groove features 154 are profiled such that the plate 112 and the lower fitting 106 cleanly separate when axial clamping between the plate 112 and the lower fitting 106 is removed. In other words, the ridge and groove features 152, 154 reduce the risk of binding between the components when the payload is released. In an embodiment, the payload release system 100 utilizes a non-explosive actuator release mechanism to supply the clamping force; however, one skilled in the art would appreciate any device or mechanism capable of providing axial restraint can be utilized. The plurality of concentric ridge features 152 and the plurality of concentric groove features 154 are shallow while still providing a large contact area between the plate 112 and lower fitting 106, to ensure clean separation when deploying the payload 102. In an embodiment, the depth or height of the plurality of concentric ridge features 152 and the plurality of concentric groove features 154 is 2-15% of the largest diameter of the features 152, 154. The shallow design further improves the self-releasing characteristics and allows for a more compact device compared to a cup-cone of equivalent moment capacity. The depth of the concentric ridge surface 154 is a function of the diameter of the mating interface so as to prevent the plate 112 from catching when deploying the payload 102.

In an embodiment, the plurality of concentric ridge features 152 and the plurality of concentric groove features 154 each have an angular profile with uniform feature size. In another embodiment, depending on the modifications required for the payload, the plurality of concentric ridge features 152 and the plurality of concentric groove features 154 may have a circular, curved, sinusoidal, variable feature size, or other profile to achieve the desired attributes, for example, strength, separation behavior, and machinability. In an embodiment, the plurality of concentric ridge features 152 extend from the plurality of concentric groove features at an angle of 45°-120°. The angle of the concentric groove features at 30°-120° act as a ramp, allowing the shear loads to be translated into axial loads. In an embodiment, the plurality of concentric ridge features 152 are .1 inches tall. In another embodiment the height of the plurality of concentric ridge features 152 can be .15-.35 inches, depending on the modifications desired for the payload 102. In an embodiment, the ratio between the depth and the peak-to-peak spacing between the plurality of concentric ridge features 152 is 1.4:1. The number of the plurality of concentric ridge features and the concentric ridge surfaces 152, 154 is selected depending on the modifications desired for the payload 102 and the anticipated shear loads anticipated to carry the payload 102. The more concentric ridge features and the concentric groove features 152, 154 on the first and the second mating interface 108, 110, the larger the shear load capacity of the payload release system 100. Depending on the anticipated shear loads to carry the payload 102, the lower fitting 106 and the plate 112 can include 4 concentric ridge features and concentric groove features to 15 concentric ridge features and concentric groove features. In an embodiment, the plate 112 includes a rim around the outer perimeter of the plate 112 to prevent or reduce the risk of the payload from skipping (e.g. sliding sideways when released). In another embodiment, the outer perimeter of the plate 112 is flat.

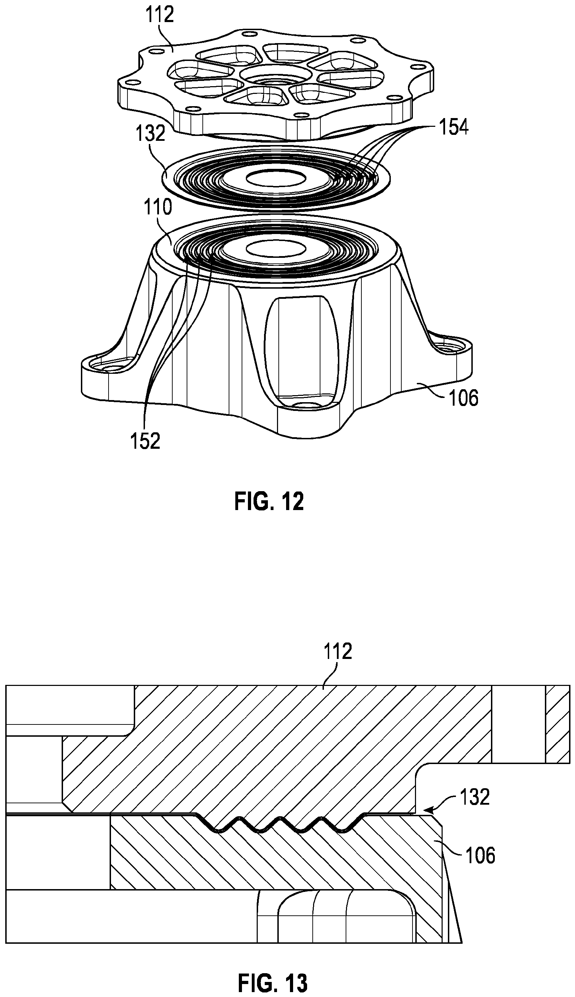

Referring to FIGS. 12 and 13, in an embodiment, the payload release system 100 includes a liner 132. The liner 132 is formed to conform with the first and the second mating interfaces 108, 110, providing a line-on-line-fit-up of the first and the second mating interfaces 108, 110. This relieves manufacturing tolerance specifications by absorbing any play/movement between the first and the second mating interfaces 108, 110 and eliminates or reduces the need for match-lapping, reducing manufacturing cost, compared to baseline cup-cone arrangements. Additionally, in one or more embodiments, the stiffness and vibration attenuation characteristics of the first and the second mating interfaces 108, 110 can be configured with the liner 132 material being selected from aluminum, titanium, copper, brass, and steel. In one embodiment, the liner 132 is substantially flat and is formed/fabricated in situ (e.g. the plate 112 and lower fitting 106 are pressed together deforming the liner 132 to the desired shape) such that the shear features on mating surfaces match. In an alternative embodiment, the liner 132 is pre-formed and coined to complete the line-on-line-fit-up. As one skilled in the art would appreciate, coining refers to deformation through the thickness of the material being formed. In yet another embodiment, the liner 132 is pre-formed to fit the concentric features. In an embodiment, the thickness of the liner 132 is 5-20% of the height of the plurality of concentric ridge features 152. This range ensures the liner 132 is thick enough to form to the first and the second mating interfaces 108, 110 while preventing the liner 132 from carrying shear load S..

In an embodiment, an adhesive or mechanical retention between the liner 132 and lower fitting 106 can be used to prevent the liner 132 from being released with the payload 102. The adhesive or mechanical retention can include but is not limited to epoxy, c-clips, crimping, or cold forming, or a combination of the foregoing for example. Under the cold forming method, the liner 132 is cold-formed in-situ between the first and the second mating interfaces 108, 110 by applying sufficient clamping force to coin (i.e., plastically yield) the liner 132 to the lower fitting 106. In this embodiment, the liner 132 is intended to provide improved load sharing between the concentric shear features, without utilizing match-lapping or similar processes. The liner 132 material can include (but is not limited to) pure aluminum, copper, brass, polymers, and composites. In yet another embodiment, multiple liners 132 can be layered or the liner 132 can be coated. In either of these embodiments, the layered liner 132 or the coated liner 132 can also be employed to obtain particular properties (electrical isolation, galvanic corrosion protection, etc.).

The payload release system 100 may include additional features described below.

According to one aspect of the disclosure of the payload release system is provided. The system includes a base having a bore hole and a plate positioned on top of the base, also having a bore hole that lines up with the bore hole of the base. The system further includes at least one mating interface having a shear feature, at least one spring assembly coupled to the base, and a releaseable actuator positioned with the base.

In addition to one or more of the features described herein, or as an alternative, further embodiments of the system may include the releaseable actuator including a release rod that extends through the bore hole of the plate and base, where the bore holes are located roughly center on the plate and base.

In addition to one or more of the features described herein, or as an alternative, further embodiments of the system may include a biasing member that encircles the release rod, a dampening disk located on a distal end of the release rod, above the biasing member, and a hollow cylindrical cap that encapsulates the release rod, biasing member, and dampening disk.

In addition to one or more of the features described herein, or as an alternative, further embodiments of the system may include the dampening disk being made at least partially from a foam material.

In addition to one or more of the features described herein, or as an alternative, further embodiments of the at least one mating interface may comprise a first mating interface on the plate and a second mating interface on the base, the bore holes extends through the first mating interface of the plate and the second mating interface of the base. The first mating interface and the second mating interface further include two or more reciprocal concentric shear features. The concentric shear feature of the first mating interface and the concentric shear feature of the second mating interface include a plurality of concentric ridge features and a plurality of concentric groove features, respectively. The height of the plurality of concentric ridge features is 2%-15% of the diameter of the base. The height of the plurality of concentric ridge features can also be .1 inches. The plurality of concentric ridge features are spaced at a ratio of 1.4 to 1 of peak to peak spacing to depth and extend from the plurality of the concentric groove features at an angle from 30° to 120°. In an embodiment, the concentric shear feature includes four concentric ridge features and four concentric groove features.

In addition to one or more of the features described herein, or as an alternative, further embodiments of the system may include a liner that is positioned in-between the base and the plate. The lines can have a thickness of 5% to 20% of the height of the concentric ridge features.

In addition to one or more of the features described herein, or as an alternative, further embodiments of the system may include positioning the liner between the first mating interface and the second mating interface.

In addition to one or more of the features described herein, or as an alternative, further embodiments of the system may include the payload release mechanism being a spring.

In addition to one or more of the features described herein, or as an alternative, further embodiments of the system may include the base having a diameter of 1 to 10 inches and the at least one mating interface has a diameter of 1 to 5 inches.

In addition to one or more of the features described herein, or as an alternative, further embodiments of the system may include a telemetry switch configured to receive and send a signal regarding launch instructions. The telemetry switch can be configured to send the signal to a launch vehicle or to a payload for launch.

The detailed description explains embodiments of the disclosure, together with advantages and features, by way of example with reference to the drawings.

The term "about" is intended to include the degree of error associated with measurement of the particular quantity based upon the equipment available at the time of filing the application.

It should also be noted that the terms "first", "second", "third", "upper", "lower", and the like may be used herein to modify various elements. These modifiers do not imply a spatial, sequential, or hierarchical order to the modified elements unless specifically stated.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description but is only limited by the scope of the appended claims.

## Claims

1. A payload release system, comprising:
a base;
a plate positioned on top of the base;
at least one mating interface;
at least one spring assembly, coupled to the base; and
a releasable actuator positioned within the base and extending through the base and the plate.

2. The payload release system of claim 1, the releasable actuator further comprising a release rod extending through a bore hole of the plate and a bore hole of the base, the bore holes positioned roughly center on the plate and the base, respectively.

3. The payload system of claim 2, further comprising:
a biasing member encircling the release rod;
a dampening disk positioned on a distal end of the release rod; and
a hollow cylindrical cap encapsulating the release rod, biasing member, and dampening disk.

4. The payload release system of claim 2, wherein the at least one mating interface comprises a first mating interface on the plate and a second mating interface on the base, the bore holes extending through the first mating interface of the plate and the second mating interface of the base.

5. The payload release system of claim 2, the at least one spring assembly further comprising:
an outer spring guide,
an inner spring guide, the inner spring guide being nested within the outer spring guide,
a top cap, coupled to a top of the outer and the inner spring guide,
a bottom cap, coupled to a bottom of the outer and the inner spring guide,
a payload release mechanism encircling the outer spring guide and positioned between the top cap and bottom cap, and
a fastener.

6. The payload release system of claim 5, further comprising a rod positioned within and extending through the inner spring guide.

7. The payload release system of claim 2, wherein the at least one spring assembly is removeably coupled to the base.

8. The payload release system of claim 2, wherein the payload release mechanism has a body configured to be compressed such that when the fastener is removed and the top cap and a top flat portion of the rod is pushed downward a predetermined distance, the at least one spring assembly may be removed from the base.

9. The payload release system of claim 2, wherein the base has a diameter of 1 to 10 inches.

10. The payload release system of claim 2, further comprising a telemetry switch configured to receive and send a signal.

11. The payload release system of claim 4, wherein the first mating interface and the second mating interface include two or more reciprocal concentric shear features.

12. The payload release system of claim 11, wherein the concentric shear feature of the first mating interface includes a plurality of concentric ridge features and a plurality of concentric groove features and the concentric shear feature of the second mating interface includes a plurality of concentric ridge features and a plurality of concentric groove features.

13. The payload release system of claim 12, wherein the plurality of concentric ridge features of the first mating interface and the second mating interface are spaced at a ratio of 1.4 to 1 of peak to peak spacing to depth.

14. The payload release system of claim 12, wherein the plurality of concentric ridge features of the first mating interface extend from the plurality of the concentric groove features at an angle from 30° to 120° and the plurality of concentric ridge features of the second mating interface extend from the plurality of the concentric groove features at an angle from 30° to 120°.

15. A method for exchanging a spring assembly comprising:
disengaging a fastening from a bottom cap of the spring assembly, thereby decoupling the spring assembly from a base;
applying a force on a top cap of the spring assembly and a rod extending through the spring assembly, thereby compressing a payload release mechanism of the spring assembly;
releasing the spring assembly from the base.
